# EUROPEAN PATENT APPLICATION

(11) **EP 1 890 500 A1**
(43) Date of publication of application: **20.02.2008**
(21) Application number: 06722393.3
(22) Date of filing: 21.04.2006
(51) Int. Cl.: H04Q 7/20

(54) **METHOD FOR PROCESSING THE DEFEATED VIDEOPHONE CALL BASED ON MOBILE COMMUNICATION NETWORK**

(30) Priority: 10.06.2005 CN 05176734
(71) Applicant: China Mobile Communications Corporation, Xicheng District Beijing 100032 (CN)
(72) Inventor: ZHENG, Zhaohui 29, Jinrong Ave., Beijing 100032 (CN); LIU, Zhangzhe 29, Jinrong Ave., Beijing 100032 (CN); FENG, Lingjun 29, Jinrong Ave., Beijing 100032 (CN); TANG, Jianfeng 29, Jinrong Ave., Beijing 100032 (CN); OUYANG, Congxing 29, Jinrong Ave., Beijing 100032 (CN); WEI, Bing 29, Jinrong Ave., Beijing 100032 (CN)
(74) Representative: Tomlinson, Edward James
(86) International application number: PCT/CN2006/000762
(87) International publication number: WO 2006/131044

(57) **Abstract**

The present invention relates to a method for processing the video telephone call failure based on the mobile communication network, which comprises the following steps: when a video telephone call initiated by a calling terminal has failed, the mobile communication network side returns a call failure message which contains a reason value of the call failure and a disconnecting signaling to said calling terminal in accordance with the reason of the call failure; after said calling terminal receives said call failure message, it queries and extracts said call failure prompt information data in accordance with said reason value and broadcasts the call failure prompt information locally. Through pre-installing the call failure prompt information in the video telephone calling terminal and sending the call failure signaling by the network side, the present invention makes the video telephone calling terminal get the reason of failure rapidly and complete the next step of concrete operation effectively when the call failed. In addition, the system resources could be well used and the waste of the system resources could be reduced because of the reason of the call failure returning duly.

## Description

### Field of the Invention

The present invention relates to a method for processing the video telephone call failure based on the mobile communication network, particularly to a method for broadcasting call failure prompt voice to a calling party when the calling party sent a video telephone call request to a called party and the connection was not established successfully, in the mobile communication system.

### Background of the Invention

With the mobile communication network (such as 3G network) putting into use for supporting the video telephone, the mobile users could make video call to each other by the video mobile terminal.

In above mobile communication network supporting the video telephone, the signal transmission between the both sides in talking is not same to the transmitting way of data flow in ancient 2G network, but the method of sending data packet is used to implement the transmission of a great deal of video or audio data So the video call messages through the switches of the both calling and called side and whole communication link are all data packet messages compressed and packaged After these data packet messages are transmitted to the video mobile terminal, they are carried out a disposal containing decompressing by the video mobile terminal and then broadcasted

In 2G network, when one calling terminal initiates a call request to a called terminal, the network side usually makes the switch of the called side or the calling side broadcast a call failure prompt voice to the calling terminal in accordance with the concrete reason of disconnecting if the called terminal happens to can't be connected, such as in the status that it is being called, it is being closed, it is out of the network region, there is no response and so on, or the wrong number of the called terminal is dialed. And the call failure prompt voice is able to indicate the concrete reason of the call failure.

The information transmission mode in the mobile communication network supporting video telephone is different from in the 2G network, therefore, when one calling terminal sends a call request to the other called terminal in the network, the network side doesn't execute any playback flow in accordance with the current international criterion if the called terminal is disconnected and the call failed Even if the network side broadcasts the call prompt voice, the calling user is unable to receive any prompt information of the call failure and yet the reason of the call failure, because the call prompt voice isn't the data packet which is disposed by data packaging and compressed. Meanwhile, the system resources are also wasted that is caused by the waiting of the calling user without knowing whether the call failed. Therefore, offering the call failure prompt information to the users and helping them to confirm how to operate further is one of the important problems whether the system operators could provide high quality communication service for the users. It is also currently the important problem how to improve the working efficiency of the network and is the problem to be solved necessarily in the network construction

### Summary of the Invention

The object of the present invention is regarding to the current status that the network side doesn't execute any playback flow and the calling user is unable to receive any prompt information of the call failure when the call failed in the mobile communication network supporting video telephone to provide a method for processing the video telephone call failure based on the mobile communication network. The method makes the calling terminal get the reason of the call failure after the call failing by pre-installing various prompt information in the video terminal and corresponding each prompt information with various signaling of the system network side

In order to accomplish the above object, the present invention provides a method for processing the video telephone call failure based on the mobile communication network, it includes following steps:
Step 1, when a video telephone call initiated by a calling terminal has failed, the mobile communication network side returns a call failure message which contains a reason value of the call failure and a disconnecting signaling to said calling terminal in accordance with the reason of the call failure; and a call failure prompt information data is pre-installed in said calling terminal;
Step 2, after said calling terminal receives said call failure message, it queries and extracts said call failure prompt information data in accordance with said reason value, and broadcasts the call failure prompt information locally.

In above technical solution, the call failure prompt information data isn't be deposited in the mobile communication network, this is different from the ancient 2G network Because of depositing the call failure prompt information data in the calling terminal, when the call from the calling terminal has failed, the mobile communication network generates a reason value of failure and through the reason value of failure generates a call failure signaling which can be received by the calling terminal. The call failure signaling makes the calling terminal be able to query and extract the call failure prompt information data deposited and broadcast the call failure prompt information in the calling terminal locally.

It can be seen from above technical solution, through pre-installing the call failure prompt information data in the calling terminal and sending the call failure message by the network side, the present invention makes the calling terminal get the reason of failure rapidly when the call failed Consequently, it could send the prompt to the video mobile users. It could not only provide well call service to the video mobile users, but also make the system resources use well and reduce the waste of the system resources because of the reason of the call failure returning duly.

The present invention will be described in detail combining with following figures and embodiments.

### Brief Description of the Drawings

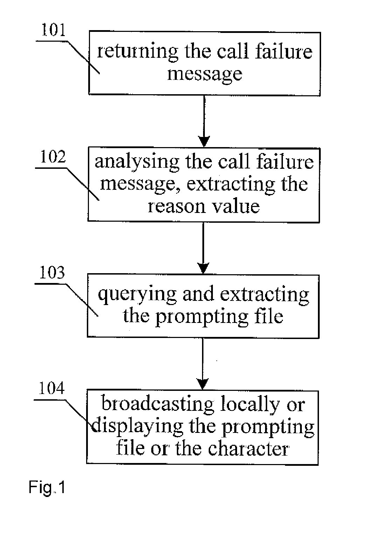

Fig. 1 is a flow chart of the Embodiment according to the present invention

### Detailed Description of the Invention

One embodiment of the present invention for broadcasting the call failure prompt information is shown in Fig 3, and its process is as follows:
Step 101, when a video telephone call initiated by a calling terminal has failed, the mobile communication network side returns a call failure message which contains a reason value of the call failure and a disconnecting signaling to the calling terminal in accordance with the reason of the call failure. A call failure prompt information data is pre-installed in the calling terminal. The reason value of the call failure is a information parameter expressing the reason of the call failure The reason of the call failure is that the called terminal is busy, the called terminal is closed, the called terminal is out of the network region, the called terminal doesn't respond or the number called by said calling terminal is dead number. The call failure prompt information data are several literal information or video files and/or audio files for prompting the reason of said call failure. Each information or file expresses a kind of reason of the call failure, each kind of reason can be uniformly organized in advance in the form of marking information, and the reason value of the call failure in the mobile communication network side is corresponded with the marking information of each reason of the call failure which is pre-installed in the calling terminal.
Step 102, after the calling terminal receives said call failure message, it analyses the call failure message and extracts said reason value of the call failure.
Step 103, the calling terminal queries and extracts the literal information or video file and/or audio file corresponding to the reason value of the call failure in accordance with the reason value of the call failure. Because the reason value of the call failure corresponds with the marking information of each reason of the call failure which is pre-installed in the calling terminal, the calling terminal could find the concrete literal information or video file and/or audio file of the call failure prompt in the calling terminal in accordance with the concrete reason value of the call failure.
Step 104, the calling terminal broadcasts the video file and/or audio file by its display parts and/or playback parts, or displays the prompting character of call failure by the display parts

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention

## Claims

1. A method for processing the video telephone call failure based on the mobile communication network, wherein it includes following steps:
Step 1, when a video telephone call initiated by a calling terminal has failed, the mobile communication network side returns a call failure message which contains a reason value of the call failure and a disconnecting signaling to said calling terminal in accordance with the reason of the call failure; and a call failure prompt information data is pre-installed in said calling terminal;
Step 2, after said calling terminal receives said call failure message, it queries and extracts said call failure prompt information data in accordance with said reason value and broadcasts the call failure prompt information locally.

2. The method for processing the video telephone call failure based on the mobile communication network as claimed in claim 1, wherein the reason value of the call failure in said step 1 is a information parameter which expresses the reason of the call failure; and said reason of the call failure is that the called terminal is busy, the called terminal is closed, the called terminal is out of the network region, the called terminal doesn't respond or the number called by said calling terminal is dead number

3. The method for processing the video telephone call failure based on the mobile communication network as claimed in claim 2, wherein the call failure prompt information data in said step 2 is several literal information or video files and/or audio files for prompting the reason of said call failure.

4. The method for processing the video telephone call failure based on the mobile communication network as claimed in claim 3, wherein said step 2 concretely is:
Step 21, after said calling terminal receives said call failure message, it analyses the call failure message and extracts said reason value of the call failure;
Step 22, said literal information or video file and/or audio file corresponding to said reason of the call failure is queried and extracted in accordance with said reason value of the call failure;
Step 23, said video file and/or audio file is broadcasted by a display parts and/or a playback parts on said calling terminal, or the literal information is displayed by the display parts..
